(19) Europäisches Patentamt
European Patent Office
Office européen des brevets

(11) EP 0 745 644 A1

# (12) DEMANDE DE BREVET EUROPEEN

(43) Date de publication:
**04.12.1996 Bulletin 1996/49**

(51) Int Cl.[6]: **C08K 9/06**

(21) Numéro de dépôt: **96420155.2**

(22) Date de dépôt: **03.05.1996**

(84) Etats contractants désignés:
**AT BE CH DE DK ES FI FR GB GR IE IT LI LU NL PT SE**

(30) Priorité: **05.05.1995 FR 9505612**

(71) Demandeur: **RHONE-POULENC CHIMIE**
**92408 Courbevoie Cédex (FR)**

(72) Inventeurs:
- **Bohin, Fabrice**
**69008 Lyon (FR)**
- **Chopin, Thierry**
**95320 Saint-Leu La Foret (FR)**
- **Dupuis, Dominique**
**95170 Deuil La Barre (FR)**
- **Soria, Meyer**
**69100 Villeurbanne (FR)**

(74) Mandataire: **Trolliet, Maurice**
**RHONE-POULENC CHIMIE,**
**Direction de la Propriété Industrielle,**
**Centre de Recherches des Carrières,**
**B.P. 62**
**69192 Saint-Fons Cédex (FR)**

## (54) Composition d'organopolysiloxane élastomérique stabilisée thermiquement par des nanoparticules métalliques et élastomère transparent obtenu

(57) La composition d'organopolysiloxane élastomérique, conduisant lorsqu'elle est réticulée à un élastomère thermiquement stable, comprend, dispersées au sein de la composition, des particules organophiles faites d'au moins un oxyde métallique sous forme de nanoparticules polycristallites - formées de cristallites de 4 à 6 nm - de taille d'au plus 50 nm et de surface spécifique BET d'au moins 250 $m^2/g$, de préférence comprise entre 250 et 300 $m^2/g$, et ayant subi un traitement de surface pour les rendre organophiles consistant à greffer des groupements organosiliciques. Elastomère transparent en résultant.

EP 0 745 644 A1

## Description

La présente invention concerne des compositions d'organopolysiloxanes génératrices d'élastomères présentant une stabilité thermique élevée lorsqu'elles sont réticulées, ainsi que les élastomères vulcanisés en résultant. Elle concerne aussi leur procédé de préparation.

Les compositions d'organopolysiloxanes génératrices d'élastomères sont des matières disponibles bien connues dans le commerce. Par rapport aux élastomères organiques, les organopolysiloxanes ou silicones présentent des propriétés de tenue thermique supérieures. Cependant, au-delà de 200° C et plus particulièrement sur des plages de température comprises entre 220 et 300° C, même les élastomères d'organopolysiloxane peuvent perdre leurs propriétés élastomériques et devenir durs et cassants après un certain temps d'exposition.

On a depuis longtemps tenté d'améliorer la stabilité thermique des silicones par l'addition de plusieurs types de composés à la matrice.

Le brevet britannique GB-A-1 251 305 propose ainsi d'incorporer au moins 3 % en poids de bioxyde de titane fumé à la composition élastomérique de base et rapporte une amélioration du comportement (compression et résistance à la réversion) de l'élastomère durci à des températures de 232 et 315° C maintenues pendant 16 et 24 heures respectivement.

Le brevet français FR-A-2 308 664 propose d'améliorer la stabilité thermique des compositions élastomériques à base de siloxanes durcies en incorporant du bioxyde de titane (notamment de granulométrie comprise entre 15 et 40 millimicrons) et de l'oxyde cérique et/ou de l'hydroxyde cérique. Ces deux additifs ensemble seraient plus efficaces que le bioxyde de titane seul et permettraient d'améliorer la tenue de l'élastomère durci entre 220 et 270° C.

La demande de brevet européen EP-A-0 595 078 propose comme stabilisateur thermique un oxyde mixte à base de bioxyde de titane comprenant de 1 à 30 % en poids d'oxyde d'aluminium ou d'oxyde de silicium, l'oxyde mixte ayant une surface spécifique BET comprise entre 10 et 150 $m^2/g$. Les oxydes présentent une stabilité de leur surface spécifique à la chaleur supérieure à celle d'un simple bioxyde de titane P25 (BET 50 $m^2/g$).

Aucune des solutions proposées jusqu'à présent n'a toutefois permis de stabiliser de manière importante les élastomères de silicone dans le cas de hautes températures notamment supérieures à 250° C, en particulier dans la gamme de températures allant de 275°C à 300° C, maintenues sur des durées importantes. Il existe donc le besoin d'améliorer encore la stabilité thermique de ces élastomères d'une manière permettant la préservation de l'essentiel au moins de leurs propriétés élastomériques et donc l'usage pour lequel ils ont été conçus, même en cas d'expositions répétées et/ou prolongées à la chaleur.

Un autre des inconvénients des réalisations de l'art antérieur provient du fait que l'incorporation de stabilisants tels que ceux du type $TiO_2$ ne permet pas d'obtenir des élastomères transparents, d'autant plus qu'il ne suffit pas d'assurer simplement une transparence initiale mais aussi de faire en sorte que cette propriété de l'élastomère durci soit sauvegardée dans la plus large mesure possible après exposition à de hautes températures.

La présente invention a donc pour objectif de fournir des compositions d'organopolysiloxanes qui, en se réticulant, conduisent à des élastomères transparents ayant une stabilité thermique élevée.

Les présents inventeurs ont découvert qu'il était possible de remplir ces objectifs en dispersant dans la composition d'élastomère des particules organophiles d'un oxyde métallique sur lequel sont greffés des groupements organosiliciques. Ce traitement permet d'obtenir des particules de grande surface spécifique et hautement dispersibles dans la composition élastomérique de base, permettant à la fois d'assurer la stabilisation de l'élastomère final vis-à-vis de la chaleur (inhibition de la thermo-oxydation par désactivation des radicaux $CH_2\bullet$ et prévention des ponts d'oxydation) et de permettre la réalisation d'élastomères transparents et stables, en l'absence, dans la composition élastomérique de base, de composés ou pigments destinés à rendre cette dernière opaque.

L'invention a donc pour objectif une composition d'organopolysiloxane élastomérique conduisant, lorsqu'elle est réticulée, à un élastomère thermiquement stable, comprenant, dispersées au sein de la composition, des particules organophiles faites d'au moins un oxyde métallique sous forme de nanoparticules polycristallites - formées de préférence de cristallites de 4 à 6 nm - de taille d'au plus 50 nm et de surface spécifique BET d'au moins 250 $m^2/g$, de préférence comprise entre 250 et 300 $m^2/g$, et ayant subi un traitement de surface pour les rendre organophiles consistant à greffer des groupements organosiliciques.

Par élastomère thermiquement stable dans le sens de l'invention, on entend notamment un élastomère qui conserve des propriétés élastomériques et ne devient ni dur ni cassant lorsqu'il est soumis à une température supérieure à 200° C, notamment comprise entre 275° C et 300° C, maintenue pendant plusieurs jours, notamment 3 jours. De manière tout à fait préférée, il s'agit d'élastomères résistant ainsi à une température supérieure à 250° C, notamment comprise entre 275° C et 300° C, maintenue pendant plus de 3 jours, notamment pendant 10 jours ou plus.

En effet, de manière tout à fait remarquable, les inventeurs ont par exemple obtenu conformément à l'invention un élastomère conservant des propriétés élastomériques acceptables et ne devenant donc pas cassant après un traitement de 10 jours à 275° C. Dureté, résilience, résistance à la rupture, allongement à la rupture et résistance à la déchirure sont restés dans des limites tout à fait acceptables, c'est-à-dire dans des limites permettant l'usage prévu

de l'élastomère. En outre cet élastomère, qui était initialement transparent, a de manière surprenante conservé une grande partie de sa transparence initiale à la fois après l'addition du stabilisant et au cours du vieillissement en température.

De préférence, on utilise des particules organophiles d'un oxyde métallique choisi dans le groupe consistant en alumine $Al_2O_3$, silice $SiO_2$, oxydes des métaux de transition, notamment l'oxyde de titane $TiO_2$, et oxydes de terre rare, notamment l'oxyde de cérium $CeO_2$.

De préférence, les particules organophiles sont obtenues par une réaction dite de compatibilisation ou greffage de groupements organosiliciques, dans laquelle on fait réagir une suspension hydroalcoolique (a) de nanoparticules polycristallites (particules d'oxyde métallique) de base avec une solution alcoolique anhydre (b) comprenant au moins un alcoxysiloxane de formule (1)

$$Si(OR)_xR'_{4-x} \qquad (1)$$

dans laquelle R représente un groupe alkyle comportant de 1 à 6 atomes de carbone, R' représente un groupe hydrocarboné choisi parmi les groupes alkyle, cycloalkyle, aryle, alkylaryle, arylalkyle, alcényle et alcynyle comportant au moins 1 atome de carbone et x est un entier de 1 à 3, lesdits alcools, identiques ou différents, comportant de 1 à 5 atomes de carbone.

On peut faire subir un prétraitement de surface aux nanoparticules polycristallites d'oxyde métallique afin d'obtenir lesdites nanoparticules polycristallites de base, à savoir un traitement par un tétraalcoxysiloxane de formule (2). Les particules d'oxyde sont notamment mises en suspension dans un milieu hydroalcoolique, l'alcool comportant de préférence de 1 à 5 atomes de carbone, et on fait réagir la suspension (c) ainsi obtenue avec au moins un tétraalcoxysilane de formule (2)

$$Si(OR'')_4 \qquad (2)$$

dans laquelle R" représente un groupe alkyle comportant de 1 à 5 atomes de carbone.

De préférence, le tétraalcoxysilane est ajouté peu à peu à la suspension. En fin de traitement, on obtient une suspension hydroalcoolique (a) stable de particules, suspension (a) que l'on peut alors traiter directement avec un alcoxysilane de formule (1) comme indiqué précédemment pour la compatibilisation proprement dite.

Dans le milieu hydroalcoolique de la suspension (a), un alcoxysilane de formule (1) s'hydrolyse en silanol susceptible de se condenser sur une ou plusieurs fonctions hydroxyle présentes à la surface de l'oxyde métallique.

La réaction globale de compatibilisation (greffage) peut donc être décrite de façon simple comme l'enchaînement des deux réactions suivantes :

1 - hydrolyse de l'alcoxysilane

$$\equiv SiOR + H_2O \rightarrow \equiv SiOH + ROH$$

2 - condensation du silanol obtenu sur la surface de l'oxyde

$$\equiv MOH + \equiv SiOH \rightarrow \equiv M\text{-}O\text{-}Si\equiv + H_2O.$$

De nombreux composés du silicium sont envisageables pour effectuer un tel greffage par hydrolyse/condensation mais tous ne sont pas utilisables dans les compositions selon l'invention.

Les alcoxysilanes de formule (1) définis ci-dessus sont bien adaptés, car ils sont solubles dans le milieu de greffage et ne s'hydrolysent pas trop vite dans ce milieu.

Un composé de silicium qui présenterait une grande aptitude à l'hydrolyse serait susceptible de se condenser sur lui-même et non pas sur les fonctions hydroxyle de surface du minéral. C'est le cas par exemple d'un disilazane.

Cet inconvénient est évité par le choix des alcoxysilanes de formule (I) dont la réactivité est modérée.

Parmi les composés de formule (1), il est préférable que le radical R représente un groupe méthyle ou éthyle.

De même, il est avantageux que R' représente un groupe octyle, dodécyle ou octadécyle.

En outre, on préfère les trialcoxysilanes, c'est-à-dire les composés tels que x = 3.

A titre d'exemples préférés, on peut mentionner l'octyltriméthoxysilane (OTMS), le dodécyltriméthoxysilane

(DTMS) ou le n-octadécyltriméthoxysilane (ODTMS).

Parmi les oxydes métalliques, on peut citer en particulier l'oxyde de titane, utilisé sous forme rutile ou anatase. Il peut s'agir notamment d'anatase lenticulaire ou plaquettaire. De manière avantageuse, on peut utiliser des oxydes de titane $TiO_2$ tels que décrits dans les demandes de brevet EP-A-0 335 773 et EP-A-0 351 270. A cet effet, le contenu de ces deux demandes est incorporé ici par référence.

Quand on utilise des composés 2, la quantité de composés 1, relativement au poids de l'ensemble composés 1 + composés 2, varie de préférence entre 5 et 40 %. De préférence, les particules organophiles comprennent de 60 à 90 % de $TiO_2$ et de 40 à 10 % de $SiO_2$.

On décrit ci-après un procédé préféré pour préparer les particules d'oxyde organophiles utilisables dans l'invention.

Selon ce procédé, on prépare une suspension hydroalcoolique (a) de particules d'oxyde métallique de base. Les particules d'oxyde se dispersent facilement dans le milieu. Le rapport pondéral de l'eau à l'alcool dans cette suspension est avantageusement compris entre 0,2 et 0,8. On opère de préférence avec une suspension diluée et la concentration en poids des particules dans cette suspension est de préférence comprise entre 5 g/l et 200 g/l. La suspension hydroalcoolique (a) peut être acide ou basique et son pH varie selon l'oxyde à traiter.

De manière générale, lorsqu'on opère en milieu basique, le pH est avantageusement compris entre 9 et 12. La base utilisée pour fixer ce pH peut être choisie parmi les hydroxydes de métaux alcalins et notamment ceux de sodium, lithium et potassium, les carbonates de métaux alcalins et notamment ceux de sodium et de potassium, l'ammoniaque et les amines primaires, secondaires ou tertiaires, telles que la monoéthylamine ou la diéthylamine. En particulier, il est préférable que le pH soit supérieur à PIE+2, où PIE est le point isoélectrique de l'oxyde à traiter.

De manière générale, lorsqu'on opère en milieu acide, le pH est avantageusement compris entre 1 et 5. L'acide utilisé pour fixer le pH peut être choisi parmi l'acide nitrique, l'acide chlorhydrique, l'acide acétique et d'autres acides organiques. En particulier, il est préférable que le pH soit inférieur à

PIE-2, où PIE est le point isoélectrique de l'oxyde à traiter.

On ajoute ensuite une solution alcoolique anhydre (b) comprenant au moins un alcoxysilane de formule (1) avec un faible débit en prenant soin d'entretenir la dispersion des matières dans le milieu réactionnel. Cela permet d'éviter les risques résiduels d'autocondensation du ou des alcoxysilanes.

De préférence, l'alcool de la solution (b) est identique à celui de la suspension hydroalcoolique (a).

L'apport d'alcoxysilane varie en fonction de la taille des particules d'oxyde à traiter et le rapport pondéral de la quantité totale d'alcoxysilane (1) à la quantité d'oxyde peut être de 1 à 60 %, de préférence de 2 à 30 %.

La température du milieu réactionnel lors de cet ajout se situe avantageusement entre 15 et 70° C, de préférence à la température ambiante.

Au cours de l'ajout, il se produit une floculation dans la suspension indiquant un changement des propriétés interfaciales des particules d'oxyde. Après la fin de l'ajout, il est préférable de laisser la réaction se poursuivre pendant une ou deux heures. Après l'achèvement de la réaction, les particules compatibilisées peuvent être isolées sous forme de poudre.

Pour obtenir une poudre, le mélange réactionnel est soumis à une séparation liquide/solide, avantageusement par centrifugation. Le solide séparé est lavé à l'alcool, puis séché à basse température, par exemple environ 60° C.

Lorsque le greffage de l'alcoxysilane (1) s'est déroulé en milieu ammoniacal, le mélange réactionnel est de préférence soumis à une étape de distillation à basse température pour éliminer l'ammoniaque et l'alcool, préalablement à la séparation solide/liquide.

Selon un mode particulier de réalisation, les particules hydrophobes peuvent être dispersées dans une composition organique par transfert de phase. Dans ce cas, la composition organique est ajoutée dans la suspension aqueuse ou hydroalcoolique. Le transfert des particules de la phase aqueuse à la phase organique peut s'effectuer par simple agitation suivie d'une séparation, ou par distillation.

Sans sortir du cadre de la présente invention on peut effectuer le transfert direct des particules organophiles dans une huile polydiorganosiloxane $\alpha,\omega$-dihydroxylée qui servira par la suite dans la composition de l'élastomère silicone.

On peut disperser dans la composition d'organopolysiloxane de 0,1 à 5 %, notamment de 0,2 à 3 %, de préférence de 0,3 à 1 %, environ de particules organophiles selon l'invention (par exemple de particules de $TiO_2$ traitées conformément à l'invention) par rapport à l'ensemble de la composition.

Généralement, à l'état dispersé dans la composition, les particules organophiles selon l'invention ont une surface BET comprise entre 50 et 160 $m^2/g$ et/ou des dimensions comprises entre 10 et 50 nm.

A noter que les préparations de particules organophiles selon l'invention présentent habituellement un degré de pureté élevé. En particulier, elles peuvent présenter des teneurs en chrome et antimoine inférieures à 0,5 ppm, en vanadium et nickel inférieures à 1, en plomb et étain inférieures à 5.

La présente invention a aussi pour objet un procédé de stabilisation des élastomères d'organopolysiloxane ou de préparation de tels élastomères stables consistant à incorporer, ainsi que cela vient d'être décrit, à la composition élastomérique de base un stabilisant tel que décrit ci-dessus par ses caractéristiques/propriétés et/ou son mode de préparation.

La présente invention a également pour objet un élastomère d'organopolysiloxane transparent susceptible d'être obtenu par durcissement d'une composition selon l'invention telle que décrit ci-dessus.

L'invention a encore pour objet un élastomère d'organopolysiloxane transparent et thermiquement stable, c'est-à-dire conservant au moins l'essentiel de ses propriétés d'élastomère après exposition à une température supérieure à 200° C, notamment comprise entre 275° C et 300° C, pendant plusieurs jours, notamment trois jours, et plus particulièrement pendant au moins 3 jours, notamment pendant 10 jours ou plus.

L'invention va être maintenant décrite plus en détail par la description non limitative de types de compositions élastomériques auxquelles l'invention peut s'appliquer, c'est-à-dire dans lesquelles les particules organophiles de l'invention peuvent être dispersées; la description d'exemples non limitatifs de préparation de ces particules; et la description d'un exemple décrivant des compositions stabilisées conformément à l'invention pour l'une et avec des composés du commerce pour les autres, avec traitement thermique poussé.

**COMPOSITION ELASTOMERIQUE DE BASE**

L'invention s'applique tout particulièrement aux compositions élastomériques d'organopolysiloxane vulcanisables à chaud qui comprennent :

A. - 100 parties d'au moins une gomme diorganopolysiloxane ayant une viscosité supérieure à 1 000 000 mPa.S à 25° C.
B. - de 5 à 150 parties d'une charge renforçante.
C. - de 0,1 à 7 parties d'un peroxyde organique.
F. - composé "antistructure".

Les gommes A. sont des produits bien connus, commercialisés par les fabricants de silicones et elles peuvent être fabriquées en opérant selon les techniques déjà connues.

Les gommes diorganopolysiloxaniques A. de viscosité supérieure à 1 000 000 mPa.s à 25° C, de préférence supérieure à 2 000 000 mPa.s à 25° C, sont des polymères linéaires, de poids moléculaire élevé, dont la chaîne diorganopolysiloxane est constituée essentiellement des motifs de formule $R_2SiO$; cette chaîne est bloquée à chaque extrémité par des motifs de formule $R_3SiO_{0,5}$ et/ou le radical de formule OR'. R et R' sont des radicaux organiques, en particulier alcoyle. La présence, le long de la chaîne diorganopolysiloxane, de faibles quantités de motifs autres que $R_2SiO$, par exemple de formule $RSiO_{1,5}$ et/ou $SiO_2$, n'est cependant pas exclue dans la proportion d'au plus 2 % par rapport au nombre de motifs $R_2SiO$. Bien que la signification des radicaux R et R' soit explicitée ci-dessous plus en détail, on doit préciser que par radical alcoyle, on entend des radicaux alcoyles en $C_1$-$C_4$ et plus spécialement les radicaux méthyle, éthyle, n-propyle et n-butyle.

A titre d'exemples concrets de motifs de formules $R_2SiO$ et $R_3SiO_{0,5}$ et de radicaux de formule OR', peuvent être cités ceux de formules : $(CH_3)_2SiO$, $CH_3(CH_2{=}CH)SiO$, $CH_3(C_6H_5)SiO$, $(C_6H_5)_2SiO$, $CH_3(C_2H_5)SiO$, $(CH_3CH_2CH_2)CH_3SiO$, $CH_3(n.C_3H_7)SiO$, $(CH_3)_3SiO_{0,5}$, $(CH_3)_2CH_2{=}CHSiO_{0,5}$, $(CH_3)(C_6H_5)_2SiO_{0,5}$, $(CH_3)(C_6H_5)(CH_2{=}CH)SiO_{0,5}$, $CF_3CH_2CH_2SiO_{0,5}$, -OH, $-OCH_3$, $-OC_2H_5$, $-O-n.C_3H_7$, $-O-iso.C_3H_7$, $-O-n.C_4H_9$, $-OCH_2CH_2OCH_3$.

Les gommes A. préférées sont les gommes formées d'un enchaînement de motifs siloxy de formule $R_2SiO$, bloqués à chaque extrémité de leurs chaînes par un motif siloxy de formule $R_3SiO_{0,5}$ et/ou un radical de formule OR'; dans ces formules, les symboles R, identiques ou différents, représentent des radicaux méthyle, éthyle, n-propyle, phényle, vinyle et trifluoro-3,3,3 propyle, au moins 60 % en nombre de ces radicaux étant des radicaux méthyle et au plus 3 % molaire des motifs siloxy étant des motifs organovinylsiloxy, le symbole R' représente un atome d'hydrogène, un radical alcoyle ayant de 1 à 4 atomes de carbone, le radical bétaméthoxy-éthyle.

Dans le cadre de la présente invention on préfère tout particulièrement utiliser des gommes diméthylpolysiloxanes vinylées, c'est-à-dire comportant des radicaux vinyle liés aux atomes de silicium dans la chaîne et/ou aux extrémités de la chaîne à une teneur molaire en motif vinylméthylsiloxy d'au plus 1 %.

Les charges B., de préférence les silices renforçantes B. sont utilisées à raison de 5 à 150 parties, de préférence de 8 à 100 parties, pour 100 parties de gommes diorganospolysiloxanes A. Elles sont choisies parmi les silices de combustion et les silices de précipitation. Elles ont une surface spécifique, mesurée selon les méthodes BET et CTAB, d'au moins 50 $m^2/g$, de préférence supérieure à 70 $m^2/g$, une dimension moyenne des particules primaires inférieure à 80 nanomètres et une densité apparente inférieure à 200 g/litre.

Ces silices peuvent être incorporées telles quelles ou après avoir été traitées par des composés organosiliciques habituellement utilisés pour cet usage. Parmi ces composés figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20

%, de préférence 18 % environ.

En plus des silices renforçantes B. peuvent être introduites des charges minérales semi-renforçantes ou de bourrage B. Ces charges B. sont plus grossières et ont un diamètre particulaire moyen supérieur à 0,1 µm. Ces charges B. sont représentées plus spécialement par le quartz broyé, les argiles calcinées, les silices de diatomées, le carbonate de calcium, les oxydes de fer, de titane, de magnésium, d'aluminium, le sulfate de zinc et le sulfate de baryum. Elles sont introduites à raison de 5 à 120 parties, de préférence de 10 à 50 parties, pour 100 parties de gomme A. Ces charges minérales peuvent être utilisées telles quelles, c'est-à-dire non traitées ou traitées avec les composés organosiliciques mentionnés ci-avant dans le cas des silices renforçantes B.

Les peroxydes organiques C. sont utilisés à raison de 0,1 à 7 parties, de préférence de 0,2 à 5 parties, pour 100 parties des gommes A. Ils sont bien connus des techniciens et comprennent plus spécialement le peroxyde de benzoyle, le peroxyde de dichloro-2,4 benzoyle, le peroxyde de dicumyle, le bis(t-butylperoxy)-2,5 diméthyl-2,5 hexane, le perbenzoate de t-butyle, le carbonate de peroxy t-butyle et d'isopropyle, le peroxyde de di-t-butyle, le bis(t-butylperoxy)-1,1 triméthyl-3,3,5 cyclohexane. Ces matériaux peuvent également être réticulés par le Pt (composés platiniques).

Ces divers peroxydes se décomposent à des températures et à des vitesses parfois différentes. Ils sont choisis en fonction des conditions de durcissement exigées. Dans le cas de l'utilisation de gommes vinylées, le bis(t-butylperoxy)-2,5 diméthyl-2,5 hexane convient plus particulièrement.

Les compositions selon l'invention peuvent comporter en outre de 0,1 à 10 parties, de préférence de 0,3 à 5 parties, d'au moins une huile diorganopolysiloxanique (F.) de viscosité d'au plus 5 000 mPa.s à 25° C formée d'un enchaînement de motifs de formule $R''_2SiO$ et bloquée à chaque extrémité de sa chaîne par un radical de formule OR'; dans ces formules, les symboles R", identiques ou différents, représentent des radicaux méthyle, phényle, vinyle, au moins 40 % en nombre de ces radicaux étant méthyle et le symbole R' a la signification donnée sous A.

La signification des symboles R" et R' a été explicitée précédemment.

A titre d'exemples concrets de motifs de formule $R''_2SiO$ et de radicaux de formule OR', peuvent être cités ceux de formules : $(CH_3)_2SiO$, $CH_3(CH_2{=}CH)SiO$, $CH_3(C_6H_5)SiO$, $(C_6H_5)_2SiO$, $C_6H_5(CH_2{=}CH)SiO$, -OH, $-OCH_3$, $-OC_2H_5$, $-O\text{-}n.C_3H_7$, $-OCH_2CH_2OCH_3$.

De préférence, sont utilisées :

- des huiles diméthylpolysiloxanes bloquées à chaque extrémité de leur chaîne par des radicaux hydroxyle, méthoxyle, bétaméthoxyéthoxyle, de viscosité de 10 à 200 mPa.s à 25° C;
- des huiles méthylphénylpolysiloxanes, constituées de motifs $CH_3(C_6H_5)SiO$, bloquées à chaque extrémité de leur chaîne par des radicaux hydroxyle et/ou méthoxyle, de viscosité de 40 à 2 000 mPa.s à 25° C.

L'utilisation des huiles F. a pour objet d'empêcher les compositions de l'invention de subir une évolution au cours du stockage, et plus précisément de se structurer, de durcir; ce sont donc des agents "antistructures". Leur utilisation est surtout recommandée lorsque les quantités de silices renforçantes B. sont élevées, par exemple au-dessus de 30-40 parties pour 100 parties de gomme A.

D'autres agents "antistructures" peuvent remplacer en totalité ou en partie les huiles F., par exemple le diphénylsilanediol et les silanes de formules :

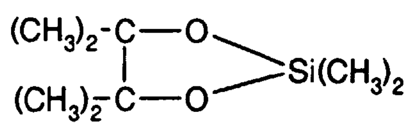

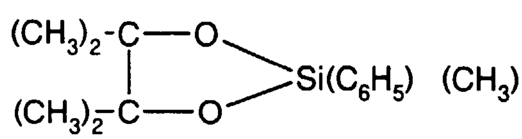

Cependant, ils sont souvent plus coûteux et/ou exigent plus de travail pour leur dispersion dans les compositions de l'invention que les huiles F.

D'autres additifs peuvent être ajoutés aux compositions selon l'invention, notamment :

- du platine ou un composé du platine conformément à l'enseignement du brevet US-A-3 514 424 en vue d'améliorer

la résistance à la flamme,

- un acide gras (stéarique, laurique, oléique, palmitique), ou son sel métallique pour améliorer la travaillabilité conformément à l'enseignement de la demande japonaise KOKAI 58/027 749,
- un stabilisant thermique choisi parmi un sel d'acide organique de fer, par exemple l'octoate de fer, à la dose de 20 à 50 ppm de fer par rapport au poids total de la composition, et de l'oxyde de titane, conformément à l'enseignement des brevets américains US-A-3 647 741 et US-A-3 692 737 et aussi les composés (D) et/ou (E) selon FR-A-2 592 656.

La préparation des compositions conformes à l'invention s'effectue à l'aide de moyens mécaniques connus, par exemple de pétrins, de mélangeurs à cylindres, de mélangeurs à vis. Les divers constituants sont incorporés dans ces appareils dans un ordre pouvant être quelconque. Il est toutefois recommandé de charger tout d'abord les gommes A. et les silices renforçantes B. et en dernier lieu les peroxydes C.

Les compositions obtenues sont stables au stockage. Elles sont particulièrement aptes au moulage et à l'extrusion-moulage.

Elles sont durcissables en élastomères par chauffage sous pression ou à l'air ambiant à des températures de l'ordre de 100 à 350° C, et/ou par irradiation à un rayonnement gamma à des doses comprises entre 8 et 20 Mrads. La durée de chauffage varie évidemment avec la température, la pression et la nature des peroxydes; elle est généralement de plusieurs minutes vers 100-200° C et de quelques secondes vers 250-350° C. Le traitement par irradiation permet d'améliorer encore la tenue aux huiles conformément à l'enseignement du brevet français FR-A-2 057 433.

Les élastomères ainsi formés peuvent être chauffés ultérieurement, surtout ceux obtenus par moulage, dans l'intervalle 200-280° C, pendant une période d'au moins une heure, dans le dessein d'achever leur réticulation et d'éliminer les matières volatiles qu'ils renferment.

L'invention s'applique bien entendu aussi aux compositions élastomériques vulcanisables à froid, réticulant par polyaddition ou polycondensation.

## EXEMPLES

### Exemple 1

La synthèse du stabilisant thermique, ici à base de $TiO_2$, est réalisée en deux étapes.

a) synthèse d'une suspension colloïdale à base d'oxyde de titane $TiO_2$.

On entend ici par suspension colloïdale un système constitué de fines particules de dimension colloïdale à base d'oxyde et/ou d'oxyde-hydrate (hydroxyde) de titane, en suspension dans une phase aqueuse. Les particules élémentaires de dioxyde de titane selon l'invention, sous forme d'agglomérats ou de particules individualisées, peuvent être obtenues par tout moyen connu de l'homme du métier.

Elles peuvent en particulier être obtenues selon EP-A-0 335 773, par hydrolyse d'un composé du titane, puis récupération du solide formé au cours de cette hydrolyse.

Le composé de titane hydrolysé peut être choisi parmi les halogénures, les oxyhalogénures, les nitrates, les alcoxydes et les sulfates de titane.

L'opération d'hydrolyse peut être réalisée par chauffage de la solution de composé de titane. Elle peut, dans certains cas, être réalisée en présence de germes de dioxyde de titane de pureté plus élevée, comme ceux décrits dans EP-A-0 351 270.

Il est aussi possible de récupérer le produit obtenu, de le laver et de le redisperser en milieu acide, de manière à obtenir une suspension colloïdale.

b) traitement de surface des particules nanométriques (taille de 40 nm et surface spécifique de 290 $m^2/g$) de la suspension colloïdale.

Dans un bécher, on introduit 250 g de suspension colloïdale (50 g de $TiO_2$) diluée dans 250 ml d'eau.

Afin de se fixer à pH = 10, on ajoute environ 100 ml de $NH_4OH$ à 20 % et 1250 ml d'EtOH absolu pour diluer la solution.

On passe la solution aux ultra-sons pour désagglomérer les particules. On introduit ensuite à vitesse contrôlée 61 g de silicate d'éthyle (35 % $SiO_2$) contenu dans 395 ml d'EtOH absolu.

On introduit encore 25,6 g de triméthoxyoctylsilane (38,2 % par rapport au $TiO_2$ et $SiO_2$) dans 75 ml d'EtOH à vitesse contrôlée (vitesse d'introduction 2 ml/min). On maintient l'agitation pendant 4 heures. Le produit est laissé au repos, puis lavé à l'alcool et séparé par centrifugation, puis séché à basse température et broyé.

### Exemple 2

Dans cet exemple, les particules à traiter sont des particules d'oxyde de titane sous forme anatase lenticulaire

(obtenu par thermohydrolyse d'oxychlorure de titane en présence d'acide citrique). Ces particules polycristallines (taille de cristallite = 6 nm environ) ont un diamètre de 40 nm, une surface BET de 290 $m^2/g$ et sont bien individualisées.

Dans un réacteur agité à 500 tours/minute, on prépare un pied de cuve en mélangeant, à 25° C, 240 ml d'eau permutée, 500 ml d'éthanol pur, 260 ml d'une solution aqueuse d'ammoniaque à 25 % en $NH_3$ et 10 g d'oxyde de titane.

On effectue le prétraitement de surface en ajoutant à un débit de 15 ml/h une solution contenant 12 g de tétraéthylorthosilicate dans 50 ml d 'éthanol. En fin d'ajout, on obtient une suspension stable.

On procède ensuite à la compatibilisation en ajoutant à un débit de 15 ml/h une solution contenant 5 g d'octyltriméthoxysilane dans 10 ml d'éthanol. En fin de réaction, on obtient une suspension floculée qui sédimente dans le réacteur. Le produit est lavé, séparé par centrifugation, séché à basse température et broyé.

**Exemple 3**

Dans cet exemple, les particules à traiter sont des particules d'oxyde de titane sous forme anatase lenticulaire (obtenu par thermohydrolyse d'oxychlorure de titane en présence d'acide citrique). Ces particules polycristallines (taille de cristallite = 6 nm environ) ont un diamètre de 40 nm, une surface BET de 290 $m^2/g$ et sont bien individualisées.

Dans un réacteur agité à 500 tours/minute, on prépare un pied de cuve en mélangeant, à 25° C, 240 ml d'eau permutée, 500 ml d'éthanol pur, 260 ml d'une solution aqueuse d'ammoniaque à 25 % en $NH_3$ et 10 g d'oxyde de titane.

On effectue le prétraitement de surface en ajoutant à un débit de 15ml/h une solution contenant 12 g de tétraéthylorthosilicate dans 50 ml d'éthanol. En fin d'ajout, on obtient une suspension stable.

On procède ensuite à la compatibilisation en ajoutant à un débit de 15 ml/h une solution contenant 5 g d'octyltriméthoxysilane dans 10 ml d'éthanol. En fin de réaction, on obtient une suspension floculée qui sédimente dans le réacteur.

On laisse mûrir cette suspension pendant 2 heures sous agitation.

Puis on procède à une distillation sous vide pour éliminer l'éthanol et l'ammoniaque à une température de 70-80° C sous une pression de 8 kPa environ (environ 60 mm de Hg). Lorsque environ 200 ml de distillat sont recueillis, on laisse refroidir la réacteur, on rétablit la pression normale et on ajoute de l'eau dans le réacteur de manière à réajuster au volume initial. On renouvelle alors ces opérations pour éliminer l'éthanol et l'ammoniaque résiduels.

Lorsque le volume dans le réacteur n'est plus que de 500-600 ml, le mélange commence à mousser, la dispersion paraît savonneuse et nacrée. On laisse alors refroidir. Le contenu du réacteur est récupéré.

La charge totale du réacteur est séparée par centrifugation. Le gâteau de centrifugation est remis en suspension dans 100 ml d'éthanol absolu, bien mélangé, puis centrifugé.

Le gâteau obtenu est assez compact, ferme. On le laisse sécher à l'air pour obtenir une poudre.

**Exemple 4**

On effectue la compatibilisation de particules d'oxyde de cérium de 8 nm et surface BET de 200 $m^2/g$.

Dans un réacteur agité à 500 tours/minute, on prépare un pied de cuve en mélangeant, à 25° C, 500 ml d'eau permutée, 500 ml d'éthanol pur et 5 g de colloïde d'hydrate de cérium. Le pH de la suspension hydroalcoolique est ajusté à 3,5 avec la quantité nécessaire d'acétate de sodium.

Une solution contenant 1 g d'octyltriméthoxysilane dans 50 ml d'éthanol est ajoutée au pied de cuve à un débit de 15 ml/h. On obtient une suspension floculée qui sédimente dans le réacteur.

**Exemple 5**

Composition avec stabilisant - exemple comparatif :

On a introduit 0,3 % en poids de $TiO_2$ de provenances différentes au sein d'une composition d'EVC (élastomère vulcanisable à chaud) classique, à savoir un $TiO_2$ selon l'invention et deux $TiO_2$ du commerce.

La composition d'EVC classique comprend :

- 100 parties en poids de gomme polyméthylvinylsiloxane, vinylée dans la chaîne, de viscosité $20.10^6$ mPa.s,
- 2,5 parties en poids d'huile polydiméthylsiloxane $\alpha,\omega$-dihydroxylée de viscosité 50 mPa.s,
- 49 parties en poids de silice pyrogénée traitée pour hydrophober les sites silanols de surface, et
- 0,7 partie en poids de peroxyde de dichloro-2,4 benzoyle.

L'ensemble constitué par la composition d'EVC classique et de $TiO_2$ est ensuite réticulé à 155° C pendant 8 minutes.

Les élastomères obtenus ont été exposés à un recuit de 4 heures à 200° C, puis à une exposition de test de 3 jours à 275° C et 10 jours à cette même température.

Les résultats sont indiqués dans le tableau suivant où l'on voit immédiatement que seul l'EVC n° 2 stabilisé par le $TiO_2$ selon l'invention (préparé selon l'exemple 1) résiste à la température et conserve ses propriétés élastomériques. On a également remarqué que, malgré un léger jaunissement au recuit à 200° C, l'élastomère selon l'invention conserve sa transparence même après le traitement de 10 jours à 275° C.

En revanche, l'incorporation des particules de $TiO_2$ du commerce conduit à des élastomères (n° 3 et n° 4) blancs et non transparents et qui, comme l'élastomère de base transparent n° 1, deviennent cassants après le traitement à 275° C pendant 3 jours.

Abréviations dans le tableau :

DSA Dureté (norme DIN 53 505)
RZ Résilience (norme DIN 53 512; valeur en %)
R/R Résistance à la rupture (norme ISO R 37; valeur en M.Pa)
A/R Allongement à la rupture (norme ISO R 37; valeur en %)
R/D Résistance à la déchirure (norme ASTM D 624/A 0,5 mm; valeur en kN/m).

| Composition | | EVC ... 100 | Invention EVC ... 100 TiO2 ... 0.3 | TiO2 UF01 Tioxide EVC ... 100 TiO2 ... 0.3 | $TiO_2$ P25 Degussa EVC ... 100 TiO2 ... 0.3 |
|---|---|---|---|---|---|
| Couleur | | Incolore | Incolore | Blanc | Blanc |
| Transparence | | ++ | + | | |
| Jaunissement au recuit | | Non | Léger | Non | Léger |
| Type de TiO2 | | | TiO2 nanométrique selon l'invention | TiO2 nanométrique du commerce | TiO2 nanométrique du commerce |
| Cristallographie | | | Anatase | Rutile | Anatase |
| Taille cristallites (nm) | | | 4 à 6 | 18 | 30 environ |
| Taille particules (nm) | | | 40 | | |
| Surface BET | | | 290 | 44 | 50 |
| % TiO2 | | | 65 | 46,7 | > 99,5 |
| % SiO2 | | | 35 | 53,3 | - |
| Recuit 4 h | DSA | 58,5 | 57 | 58 | 58 |
| 200° C | RZ | 46 | 47,5 | 47,5 | 48 |
| | R/R | 10 | 9,7 | 9,3 | 10,4 |
| | A/R | 321 | 338 | 311 | 363 |
| | R/D | 24,4 | 26 | 26 | 26,2 |
| 3 jours | DSA | C | 63 | C | C |
| 275° C | RZ | A | 51,5 | A | A |
| | R/R | S | 6,5 | S | S |
| | A/R | S | 154 | S | S |
| | R/D | E | 14 | E | E |
| 10 jours | DSA | C | 72 | C | C |
| 275° C | RZ | A | 55 | A | A |
| | R/R | S | 5,4 | S | S |
| | A/R | S | 130 | S | S |
| | R/D | E | 12 | E | E |

## Revendications

1. Composition d'organopolysiloxane élastomérique, conduisant lorsqu'elle est réticulée à un élastomère thermiquement stable, comprenant, dispersées au sein de la composition, des particules organophiles faites d'au moins un oxyde métallique sous forme de nanoparticules polycristallites - formées de cristallites de 4 à 6 nm - de taille d'au plus 50 nm et de surface spécifique BET d'au moins 250 $m^2/g$, de préférence comprise entre 250 et 300 $m^2/g$, et ayant subi un traitement de surface pour les rendre organophiles consistant à greffer des groupements organosiliciques.

2. Composition selon la revendication 1, caractérisée en ce que le ou les oxydes métalliques sont choisis dans le groupe consistant en alumine $Al_2O_3$, silice $SiO_2$, oxydes des métaux de transition, notamment l'oxyde de titane $TiO_2$ , et oxydes de terre rare, notamment l'oxyde de cérium $CeO_2$.

3. Composition selon la revendication 1 ou 2, caractérisée en ce que les particules organophiles sont telles qu'obtenues en faisant réagir une suspension hydroalcoolique (a) de nanoparticules polycristallites de base avec une solution alcoolique anhydre (b) comprenant au moins un alcoxysilane de formule (1)

$$Si(OR)_xR'_{4-x} \quad (1)$$

dans laquelle R représente un groupe alkyle comportant de 1 à 6 atomes de carbone, R' représente un groupe hydrocarboné choisi parmi les groupes alkyles, cycloalkyle, aryle, alkylaryle, arylalkyle, alcényle et alcynyle comportant au moins 1 atome de carbone et x est un entier de 1 à 3, lesdits alcools, identiques ou différents, comportant de 1 à 5 atomes de carbone.

4. Composition selon la revendication 3, caractérisée en ce que R est le groupe méthyle ou éthyle.

5. Composition selon la revendication 3 ou 4, caractérisée en ce que R' est le groupe octyle, dodécyle ou octadécyle.

6. Composition selon l'une des revendications 3 à 5, caractérisée en ce que x vaut 3.

7. Composition selon l'une quelconque des revendications 3 à 6, caractérisée en ce que la suspension hydroalcoolique (a) de nanoparticules polycristallites de base, qui est mise à réagir avec la solution alcoolique anhydre (b) comprenant au moins un alcoxysilane de formule (1), comprend des nanoparticules ayant subi un prétraitement et est obtenue en faisant réagir une suspension hydroalcoolique (c) de nanoparticules polycristallites d'oxyde métallique avec au moins un tétraalcoxysilane de formule (2)

$$Si(OR'')_4 \quad (2)$$

dans laquelle R" représente un groupe alkyle comportant de 1 à 5 atomes de carbone.

8. Composition selon l'une des revendications 3 à 7, caractérisée en ce que l'oxyde métallique est l'oxyde de titane $TiO_2$.

9. Composition selon la revendication 7, caractérisée en ce que la quantité de composés 1, relativement au poids de l'ensemble composés 1 + composés 2, varie entre 5 et 40 %.

10. Composition selon l'une quelconque des revendications 1 à 9, caractérisée en ce que l'on incorpore de 0,1 à 5 %, de préférence de 0,3 à 1 % de particules organophiles, par rapport à l'ensemble de la composition.

11. Composition selon l'une quelconque des revendications 3 à 10, caractérisée en ce que les particules organophiles comprennent de 60 à 90 % de $TiO_2$ et de 40 à 10 % de $SiO_2$.

12. Composition selon l'une quelconque des revendications 1 à 11, caractérisée en ce que les particules organophiles dispersées dans la composition ont une surface spécifique BET comprise entre 50 et 160 $m^2/g$ et des dimensions comprises entre 10 et 50 nm.

**13.** Elastomère d'organopolysiloxane transparent susceptible d'être obtenu par durcissement d'une composition selon l'une quelconque des revendications 1 à 12.

**14.** Elastomère d'organopolysiloxane transparent et thermiquement stable, conservant au moins l'essentiel de ses propriétés d'élastomère après exposition à une température supérieure à 200° C, notamment de l'ordre de 275° C, pendant au moins 3 jours.

Office européen des brevets

# RAPPORT DE RECHERCHE EUROPEENNE

Numero de la demande
EP 96 42 0155

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 351 797 (CANON)<br>* page 6, ligne 37 - ligne 41 *<br>* page 6, ligne 44 - ligne 45 *<br>--- | 1,2, 10-14 | C08K9/06 |
| A | EP-A-0 342 025 (DOW CORNING)<br>* revendication 1 *<br>--- | 1 | |
| A | EP-A-0 522 738 (DOW CORNING)<br>* page 4, ligne 12 - ligne 35 *<br>----- | 1 | |
| | | | **DOMAINES TECHNIQUES RECHERCHES (Int.Cl.6)** |
| | | | C08K |

Le présent rapport a été établi pour toutes les revendications

| Lieu de la recherche | Date d'achèvement de la recherche | Examinateur |
|---|---|---|
| LA HAYE | 19 Septembre 1996 | Lentz, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)